# FASCICULE DE BREVET EUROPEEN

(11) **EP 3 655 859 B1**
(45) Date de publication et mention de la délivrance du brevet: **12.05.2021**
(21) Numéro de dépôt: 18737643.9
(22) Date de dépôt: 13.07.2018
(51) Int. Cl.: G06F 11/16, G06F 11/18, G06F 11/07, G09G 3/00, G09F 9/302

(54) **DISPOSITIF D'AFFICHAGE SECURITAIRE**
SICHERE ANZEIGEVORRICHTUNG
SAFE DISPLAY APPARATUS

(30) Priorité: 20.07.2017 FR 1756887
(43) Date de publication de la demande: 27.05.2020
(73) Titulaire: ARCYS, 31702 Blagnac Cedex (FR)
(72) Inventeur: POUDEROUX, Emmanuel, 31840 Seilh (FR)
(74) Mandataire: Cabinet Camus Lebkiri
(86) Numéro de dépôt international: PCT/EP2018/069154
(87) Numéro de publication internationale: WO 2019/016102

(56) Documents cités:
- FR-A1- 2 763 734
- US-A1- 2005 073 471
- US-A1- 2016 350 049

## Description

### DOMAINE TECHNIQUE DE L'INVENTION

L'invention se rapporte au domaine de l'affichage d'informations et de paramètres et plus particulièrement au domaine de l'affichage de données dites de sécurité.

L'invention trouve une application particulièrement intéressante pour l'affichage de données de sécurité dans le domaine du nucléaire, du transport, de l'aéronautique.

### ETAT DE LA TECHNIQUE

Dans les domaines où l'affichage de données est critique et lié à la sécurité, il est d'usage de contrôler l'affichage des données de sécurité pour s'assurer que les informations sont fiables et disponibles. En effet, les afficheurs classiques peuvent être soumis à un phénomène de figeage de pixels ou à un défaut de rafraichissement de la matrice. Ces phénomènes sont difficilement détectables en temps réel sans l'utilisation de moyens logiciels complexes, couteux et qui peuvent également tomber en panne.

En effet, il est connu une méthode consistant à utiliser des boucles de redondance permettant de contrôler via des moyens logiciels les informations affichées par rapport aux informations transmises à l'afficheur. Le document US2012/0036418 décrit un tel exemple de réalisation.

Or une telle approche devient de plus en plus complexe et couteuse à mettre en place compte tenu de la croissance des données de sécurités à afficher en temps réel, ce qui complexifie davantage les moyens à mettre en œuvre pour la détection de défaillance du moyen d'affichage.

Le document US2005/0073471 décrit un dispositif d'affichage sécuritaire comportant:
- un dispositif d'affichage comportant un port d'entrée pour la réception d'un signal d'entrée comportant au moins une information à afficher et une pluralité de matrices d'affichage superposées les unes par rapport aux autres et comportant au moins une zone d'affichage transparente;
- chaque matrice d'affichage de ladite pluralité est associée à un moyen de pilotage pour le pilotage de ladite matrice d'affichage.

Ce document ne décrit ni ne suggère que la pluralité de matrices affiche de manière simultanée la même information du signal d'entrée.

### EXPOSE DE L'INVENTION

Dans ce contexte l'invention vise à remédier aux inconvénients de l'état de la technique en proposant un dispositif d'affichage sécuritaire amélioré permettant d'afficher des informations, notamment critiques pour la sécurité, tout en s'assurant en temps réel que l'afficheur, ou que la chaine de traitement de l'information du dispositif d'affichage, n'est pas défaillant et que les informations affichées sont fiables, sûres et correctes.

Pour ce faire, l'invention propose plus particulièrement un dispositif d'affichage sécuritaire comportant un port d'entrée pour la réception d'un signal d'entrée comportant au moins une information à afficher, ledit dispositif d'affichage sécuritaire comportant une pluralité de matrices d'affichage superposées les unes par rapport aux autres et comportant au moins une zone d'affichage transparente, chaque matrice d'affichage de ladite pluralité étant associée à un moyen de pilotage pour le pilotage de ladite matrice d'affichage caractérisé en ce que chacun des moyens de pilotage est raccordé directement au dit port d'entrée de sorte que lesdites matrices d'affichage de ladite pluralité affichent simultanément ladite au moins une information dudit signal d'entrée.

Le dispositif d'affichage sécuritaire selon l'invention utilise le principe de redondance d'affichage d'informations par l'utilisation d'une pluralité de matrices, ou dalles, d'affichage présentant au moins une zone d'affichage transparente, ainsi que le principe de superposition d'informations identiques sur plusieurs supports transparents pour qu'un opérateur puisse détecter visuellement de façon simple et rapide une défaillance de l'afficheur.

La présente invention concerne un dispositif d'affichage sécuritaire pour l'affichage d'informations critiques permettant de signaler par une information visuelle un état ou un avertissement pouvant nécessiter une action immédiate, de manière sécurisée et sans doute concernant la véracité de l'information.

Un tel dispositif d'affichage sécuritaire permet d'augmenter la sécurité des affichages dans les domaines du transport, de l'aéronautique, du nucléaire et dans tout domaine nécessitant l'affichage d'informations critiques de sécurité.

Le dispositif d'affichage sécuritaire selon l'invention peut également présenter une ou plusieurs des caractéristiques ci-après prise individuellement ou selon toutes les combinaisons techniquement possibles :
- le dispositif d'affichage sécuritaire comporte une pluralité n de port d'entrée, chaque port d'entrée recevant un signal d'entrée comportant au moins une même information utile à afficher, chacun des moyens de pilotage de ladite pluralité n étant raccordé directement à un port d'entrée de ladite pluralité *n ;*
- le dispositif comporte entre deux et quatre matrices d'affichage superposées ;
- les matrices d'affichage sont des matrices à diodes électroluminescentes ou à cristaux liquides ;
- les matrices d'affichage de ladite pluralité présentent un taux de transparence égal ou supérieur à 40% ;
- le dispositif comporte un afficheur sept segments positionné en dessous de ladite pluralité de matrices de sorte que l'afficheur sept segments soit visible par transparence au travers de ladite pluralité de matrices d'affichage ;
- le dispositif comporte un voyant positionné en dessous de ladite pluralité de matrices de sorte que le voyant soit visible par transparence au travers de ladite pluralité de matrices d'affichage.

L'invention a également pour objet un dispositif de contrôle-commande comportant un dispositif d'affichage sécuritaire selon l'invention.

L'invention a également pour objet un procédé d'affichage d'au moins une information au moyen d'un dispositif d'affichage sécuritaire selon l'invention caractérisé en ce qu'il comporte :
- une étape de réception via le port d'entrée du dispositif d'affichage sécuritaire d'un signal d'entrée comportant au moins une information à afficher ;
- une étape de traitement dudit signal d'entrée comportant au moins une information à afficher par chacun des moyens de pilotage dudit dispositif d'affichage sécuritaire ;
- une étape d'affichage de ladite au moins une information à afficher de manière simultanée sur chacune des matrices d'affichage superposées dudit dispositif d'affichage sécuritaire.

L'invention a également pour objet un procédé d'utilisation du dispositif d'affichage sécuritaire selon l'invention pour la détection d'une défaillance d'affichage.

### BREVE DESCRIPTION DES FIGURES

D'autres caractéristiques et avantages de l'invention ressortiront à la lecture de la description qui suit, en référence aux figures annexées.
La figure 1 illustre schématiquement un premier exemple de réalisation d'un dispositif d'affichage sécuritaire selon l'invention.
La figure 2 illustre schématiquement un deuxième exemple de réalisation d'un dispositif d'affichage sécuritaire selon l'invention
La figure 3 illustre un exemple de représentation des données perçues par un utilisateur regardant le dispositif d'affichage sécuritaire en cas de défaillance du dispositif.
La figure 4 illustre un exemple de représentation des données perçues par un utilisateur regardant le dispositif d'affichage sécuritaire lorsque tout fonctionne correctement.

Dans toutes les figures, les éléments communs portent les mêmes références sauf précision contraire.

### DESCRIPTION DETAILLEE D'UN MODE DE REALISATION

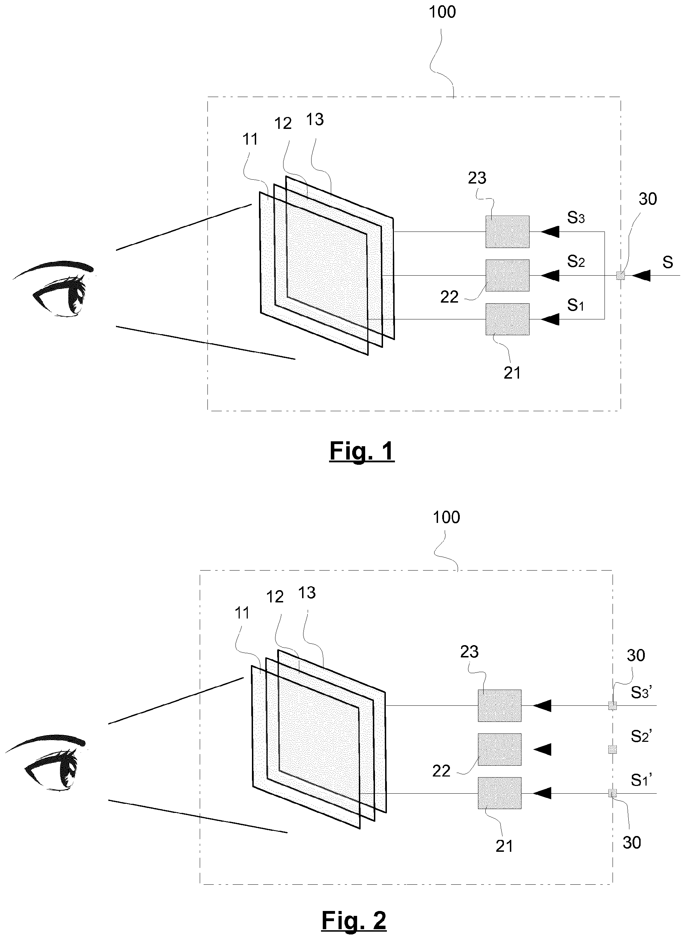

La figure 1 illustre schématiquement un premier exemple de réalisation d'un dispositif d'affichage sécuritaire 100 selon l'invention.

Le dispositif d'affichage sécuritaire 100 selon l'invention est formé par une pluralité de matrices 11, 12, 13 superposées (trois matrices sont représentées à titre d'exemple). Les matrices 11, 12, 13 sont collées les unes aux autres ou espacées les unes des autres de quelques millimètres. Avantageusement, le dispositif d'affichage sécuritaire 100 comporte entre deux et quatre matrices 11, 12, 13.

Les matrices 11, 12, 13 sont des matrices entièrement transparentes ou partiellement transparentes. Lorsque les matrices sont partiellement transparentes, elles sont transparentes au niveau des zones d'affichage.

Les matrices sont indifféremment des matrices transparentes à cristaux liquides (LCD pour Liquid Crystal Display en langue anglaise) ou encore des matrices transparentes à diodes électroluminescentes (LED pour Light Emitting Diode en langue anglaise), comme par exemple de type diode électroluminescente organique (OLED pour Organic Light Emitting Diode en langue anglaise). L'invention n'est pas limitée aux technologies décrites et il est parfaitement clair pour un homme du métier que l'utilisation d'autres technologies de matrices transparentes est également possible.

Dans le cas particulier des matrices transparentes LCD, il convient d'utiliser un film intermédiaire, de type micro-diffusant ou dépolarisant, entre les différentes matrices de manière à casser la diffusion de la matrice inférieure et ainsi éviter les phénomènes d'opacité par la superposition des plusieurs matrices LCD.

Les matrices transparentes 11, 12, 13 présentent chacune un taux de transparence égal ou supérieur à 40% et préférentiellement compris entre 70% et 100%.

Chaque matrice 11, 12, 13 est associée à un moyen de pilotage 21, 22, 23 dédié. Le moyen de pilotage 21, 22, 23 permet de contrôler et de gérer les différents pixels de la matrice associée de manière à reconstituer l'information à afficher à partir d'un signal d'entrée S1, S2 ou S3.

Les signaux d'entrée S1, S2, S3 arrivant au niveau des moyens de pilotage 21, 22, 23 sont tous identiques et identique au signal d'entrée S arrivant au port d'entrée 30 du dispositif 100. Ainsi ils contiennent tous les mêmes informations à afficher. L'utilisateur visualise donc une superposition d'informations identiques qui sont affichées simultanément sur chacune des matrices 11, 12, 13. Le signal d'entrée S est un signal de type vidéo comportant des images fixes ou animées.

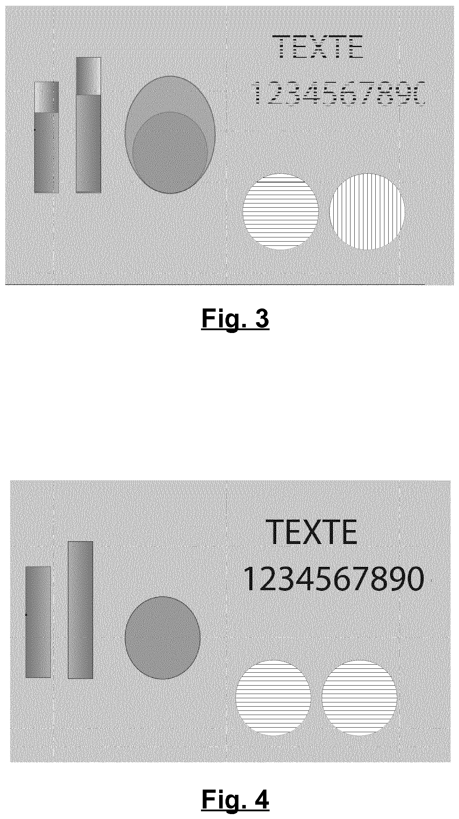

Grâce au dispositif d'affichage sécuritaire 100 selon l'invention, lorsque qu'il existe une défaillance au niveau d'une matrice, de son moyen de pilotage, ou plus généralement d'un élément de la chaine de traitement de l'information, l'utilisateur perçoit instantanément une variation de l'information affichée comme illustrée à titre d'exemple à la figure 3. Cette variation peut être une variation de forme, d'aspect, de dimension, de couleur, de positionnement, de luminosité etc.

En revanche, lorsqu'il n'y a aucune défaillance sur la chaine de traitement de l'information du dispositif d'affichage 100, les informations superposées et affichées par les matrices transparentes 11, 12, 13 sont toutes identiques. Dans ce cas, l'utilisateur ne perçoit aucune variation ni aucune différence dans la forme, l'aspect, les dimensions, la couleur, le positionnement, ou encore la luminosité des informations affichées comme illustré à la figure 4.

La « non-variation » ou « non-différence » dans l'affichage de l'information perçue par l'œil de l'utilisateur permet de s'assurer avec certitude de la fiabilité des informations affichées et du bon fonctionnement du dispositif d'affichage sécuritaire 100.

La figure 2 illustre un deuxième exemple de réalisation de l'invention. Dans ce deuxième exemple de réalisation, les signaux d'entrée S1', S2', S3' arrivant au niveau des moyens de pilotage 21, 22, 23 contiennent les mêmes informations utilises à afficher mais peuvent provenir de différents calculateur. Par exemple, les signaux S1', S2', S3'contiennent la même information utile mais avec une variation de couleurs. Ainsi, lorsque l'utilisation visualise une dominante de couleur particulière, cela signifie qu'il y a une défaillance au niveau d'une matrice, de son moyen de pilotage, ou plus généralement d'un élément de la chaine de traitement de l'information.

Le dispositif d'affichage 100 selon l'invention est donc un dispositif d'affichage sécuritaire car il permet de s'assurer à tout moment que l'information affichée correspond à l'information reçue par le dispositif d'affichage en s'affranchissant de l'utilisation de logiciels complexes et de boucles de redondances analysant chaque information critique.

Le dispositif d'affichage sécuritaire 100 selon l'invention permet facilement de répondre aux différents niveaux d'intégrité de sécurité SIL (Safety Integrity Level en langue anglaise) imposés dans des domaines où la sureté de fonctionnement est primordiale, comme par exemple dans l'affichage d'informations en temps réel des paramètres de fonctionnement d'une centrale nucléaire qui sont des données sensibles et importantes pour le pilotage du réacteur par l'opérateur.

L'utilisation de matrices transparentes 11, 12, 13 permet également d'obtenir selon les besoins un dispositif d'affichage sécuritaire « hybride ». Un tel dispositif d'affichage sécuritaire « hybride » est formé par la pluralité de matrices 11, 12, 14, et de moyens de pilotage associés 21, 22, 23 décrits précédemment, et par un ou plusieurs afficheur(s) classique(s), comme par exemple des voyants d'alarme, des afficheurs sept segments, ou tout autre afficheur ad hoc.

Dans ce cas, les différents voyants d'alarme ou afficheurs sept segments sont positionnés sous la superposition des matrices 11, 12, 13 et au niveau des zones transparentes d'affichage, de sorte que l'utilisateur visualise les informations par transparence au travers des matrices 11, 12, 13.

## Revendications

1. Dispositif d'affichage sécuritaire (100) comportant un port d'entrée (30) pour la réception d'un signal d'entrée (S, S1', S2', S3') comportant au moins une information à afficher, ledit dispositif d'affichage sécuritaire comporte une pluralité n de matrices d'affichage (11, 12, 13) superposées les unes par rapport aux autres et comportant au moins une zone d'affichage transparente , chaque matrice d'affichage (11, 12, 13) de ladite pluralité *n* étant associée à un moyen de pilotage (21, 22, 23) pour le pilotage de ladite matrice d'affichage (11, 12, 13), **caractérisé en ce que** chacun des moyens de pilotage est raccordé directement au dit port d'entrée de sorte que lesdites matrices d'affichage (11, 12, 13) de ladite pluralité affichent simultanément ladite au moins une information dudit signal d'entrée (S, S1', S2', S3').

2. Dispositif d'affichage sécuritaire (100) selon la revendication 1 **caractérisé en ce que** le dispositif d'affichage sécuritaire (100) comporte une pluralité n de port d'entrée (30), chaque port d'entrée recevant un signal d'entrée (S1', S2', S3') comportant au moins une même information utile à afficher, chacun des moyens de pilotage (21, 22, 23) de ladite pluralité n étant raccordé directement à un port d'entrée de ladite pluralité n.

3. Dispositif d'affichage sécuritaire (100) selon l'une des revendications 1 à 2 **caractérisé en ce qu'**il comporte entre deux et quatre matrices d'affichage (11, 12, 13) superposées.

4. Dispositif d'affichage sécuritaire (100) selon l'une des revendications 1 à 3 **caractérisé en ce que** les matrices d'affichage sont des matrices à diodes électroluminescentes ou à cristaux liquides

5. Dispositif d'affichage sécuritaire (100) selon l'une des revendications 1 à 4 **caractérisé en ce que** les matrices d'affichage (11, 12, 13) de ladite pluralité présentent chacune un taux de transparence égal ou supérieur à 40%.

6. Dispositif d'affichage sécuritaire (100) selon l'une des revendications 1 à 5 **caractérisé en ce qu'**il comporte un afficheur sept segments positionné en dessous de ladite pluralité de matrices (11, 12, 13) de sorte que l'afficheur sept segments soit visible par transparence au travers de ladite pluralité de matrices d'affichage (11, 12, 13).

7. Dispositif d'affichage sécuritaire (100) selon l'une des revendications 1 à 6 **caractérisé en ce qu'**il comporte un voyant positionné en dessous de ladite pluralité de matrices (11, 12, 13) de sorte que le voyant soit visible par transparence au travers de ladite pluralité de matrices d'affichage (11, 12, 13).

8. Dispositif de contrôle-commande **caractérisé en ce qu'**il comporte un dispositif d'affichage sécuritaire (100) selon l'une des revendications 1 à 7.

9. Procédé d'affichage d'au moins une information au moyen d'un dispositif d'affichage sécuritaire (100) selon l'une des revendications 1 à 7 **caractérisé en ce qu'**il comporte :
- une étape de réception via un port d'entrée (30) du dispositif d'affichage sécuritaire (100) d'un signal d'entrée comportant au moins une information à afficher ;
- une étape de traitement dudit signal d'entrée par chacun des moyens de pilotage (21, 22, 23) dudit dispositif d'affichage sécuritaire (100) dudit signal d'entrée comportant au moins une information à afficher ;
- une étape d'affichage de ladite au moins une information à afficher de manière simultanée sur chacune des matrices d'affichage superposées dudit dispositif d'affichage sécuritaire (100).

10. Procédé d'utilisation du dispositif d'affichage sécuritaire (100) selon l'une des revendications 1 à 7 pour la détection de défaillance d'affichage.

## Patentansprüche

1. Sicherheitsanzeigevorrichtung (100), umfassend einen Eingangsport (30) für den Empfang eines Eingangssignals (S, S1', S2', S3'), umfassend wenigstens eine anzuzeigende Information, die genannte Sicherheitsanzeigevorrichtung umfasst eine Vielzahl von *n* Anzeigematrizen (11, 12, 13), die einander im Verhältnis zueinander überlagert sind und wenigstens einen transparenten Anzeigebereich umfassen, wobei jede Anzeigematrix (11, 12, 13) der genannten Vielzahl *n* einem Steuermittel (21, 22, 23) zum Steuern der genannten Anzeigematrix (11, 12, 13) zugeordnet ist, **dadurch gekennzeichnet, dass** jedes der Steuermittel direkt an den genannten Eingangsport derart angeschlossen ist, dass die genannten Anzeigematrizen (11, 12, 13) der genannten Vielzahl gleichzeitig die genannte wenigstens eine Information des genannten Eingangssignals (S, S1', S2', S3') anzeigen.

2. Sicherheitsanzeigevorrichtung (100) gemäß Anspruch 1, **dadurch gekennzeichnet, dass** die genannte Sicherheitsanzeigevorrichtung (100) eine Vielzahl *n* von Eingangsports (30) umfasst, wobei jeder Eingangsport, der ein Eingangssignal (S1', S2', S3') empfängt, das wenigstens eine und dieselbe anzuzeigende nützliche Information umfasst, wobei jedes der Steuermittel (21, 22, 23) der genannten Vielzahl *n* direkt an einen Eingangsport der genannten Vielzahl *n* angeschlossen ist.

3. Sicherheitsanzeigevorrichtung (100) gemäß einem der Ansprüche 1 bis 2, **dadurch gekennzeichnet, dass** sie zwischen zwei und vier übereinander gelagerte Anzeigematrizen (11, 12, 13) umfasst.

4. Sicherheitsanzeigevorrichtung (100) gemäß einem der Ansprüche 1 bis 3, **dadurch gekennzeichnet, dass** die Anzeigematrizen Matrizen mit Leuchtdioden oder Dioden mit Flüssigkristallen sind.

5. Sicherheitsanzeigevorrichtung (100) gemäß einem der Ansprüche 1 bis 4, **dadurch gekennzeichnet, dass** die Anzeigematrizen (11, 12, 13) der genannten Vielzahl jeweils eine Transparenzquote von gleich oder mehr als 40 % aufweisen.

6. Sicherheitsanzeigevorrichtung (100) gemäß einem der Ansprüche 1 bis 5, **dadurch gekennzeichnet, dass** sie einen Anzeiger mit sieben Segmenten umfasst, der unterhalb der genannten Vielzahl von Matrizen (11, 12, 13) derart angeordnet ist, dass der Anzeiger mit sieben Segmenten per Transparenz durch die genannte Vielzahl von Anzeigematrizen (11, 12, 13) sichtbar ist.

7. Sicherheitsanzeigevorrichtung (100) gemäß einem der Ansprüche 1 bis 6, **dadurch gekennzeichnet, dass** sie eine Kontrollleuchte umfasst, die unterhalb der genannten Vielzahl von Matrizen (11, 12, 13) derart angeordnet ist, dass die Ansicht per Transparenz durch die genannte Vielzahl von Anzeigematrizen (11, 12, 13) sichtbar ist.

8. Steuerkontrollvorrichtung, **dadurch gekennzeichnet, dass** sie eine Sicherheitsanzeigevorrichtung (100) gemäß einem der Ansprüche 1 bis 7 umfasst.

9. Anzeigeverfahren wenigstens einer Information mittels einer Sicherheitsanzeigevorrichtung (100) gemäß einem der Ansprüche 1 bis 7, **dadurch gekennzeichnet, dass** es umfasst:
- einen Empfangsschritt über einen Eingangsport (30) der Sicherheitsanzeigevorrichtung (100) eines Eingangssignals, umfassend wenigstens eine anzuzeigende Information;
- einen Verarbeitungsschritt des genannten Eingangssignals durch jedes der Steuermittel (21, 22, 23) der genannten Sicherheitsanzeigevorrichtung (100) des genannten Eingangssignals, umfassend wenigstens eine anzuzeigende Information;
- einen Anzeigeschritt der genannten wenigstens einen Information, die gleichzeitig auf jeder der übereinander gelagerten Anzeigematrizen der genannten Sicherheitsanzeigevorrichtung (100) anzuzeigen sind.

10. Nutzungsverfahren der Sicherheitsanzeigevorrichtung (100) gemäß einem der Ansprüche 1 bis 7 für die Detektion eines Anzeigeausfalls.

## Claims

1. A secure display device (100) including an input port (30) for receiving an input signal (S, S1', S2', S3') including at least one piece of information to be displayed, said secure display device being includes a plurality *n* of display matrices (11, 12, 13) superimposed on each other and including at least one transparent display zone, each display matrix (11, 12, 13) of said plurality *n* being associated with a driving means (21, 22, 23) for driving said display matrix (11, 12, 13), **characterised in that** each of the driving means being directly connected to said input port such that said display matrices (11, 12, 13) of said plurality simultaneously display said at least one piece of information of said input signal (S, S1', S2', S3').

2. The secure display device (100) according to claim 1, **characterised in that** said secure display device (100) includes a plurality *n* of input ports (30), each input port (30) receiving an input signal (S1', S2', S3') including at least one same piece of useful information to be displayed, each of the driving means (21, 22, 23) of said plurality n being directly connected to an input port of said plurality *n*.

3. The secure display device (100) according to one of claims 1 to 2, **characterised in that** it includes two to four superimposed display matrices (11, 12, 13).

4. The secure display device (100) according to one of claims 1 to 3, **characterised in that** the display matrices are light emitting diode or liquid crystal matrices.

5. The secure display device (100) according to one of claims 1 to 4, **characterised in that** the display matrices (11, 12, 13) of said plurality each have a transparency rate equal to or higher than 40%.

6. The secure display device (100) according to one of claims 1 to 5, **characterised in that** it includes a seven-segment display positioned below said plurality of matrices (11, 12, 13) such that the seven-segment display is visible by transparency through said plurality of display matrices (11, 12, 13).

7. The secure display device (100) according to one of claims 1 to 6, **characterised in that** it includes an indicator light positioned below said plurality of matrices (11, 12, 13) such that the indicator light is visible by transparency through said plurality of display matrices (11, 12, 13).

8. A control-command device **characterised in that** it includes a secure display device (100) according to one of claims 1 to 7.

9. A method for displaying at least one piece of information by means of a secure display device (100) according to one of claims 1 to 7, **characterised in that** it includes:
- a step of receiving via an input port (30) of the secure display device (100) an input signal including at least one piece of information to be displayed;
- a step of processing said input signal including at least one piece of information to be displayed by each of the driving means (21, 22, 23) of said secure display device (100);
- a step of displaying said at least one piece of information to be displayed simultaneously on each of the superimposed display matrices of said secure display device (100).

10. A method for using the secure display device (100) according to one of claims 1 to 7, for detecting a display failure.
